# EUROPEAN PATENT APPLICATION

(11) **EP 3 578 888 A1**
(43) Date of publication of application: **11.12.2019**
(21) Application number: 18176427.5
(22) Date of filing: 07.06.2018
(51) Int. Cl.: F24F 3/14, F24F 11/30, F24F 11/62, F24F 11/63, G06T 7/00, G05D 7/06, G05B 19/048, G06T 7/70

(54) **AN AIR FLOW ANALYSIS SYSTEM AND METHOD**

(71) Applicant: Koninklijke Philips N.V., 5656 AE Eindhoven (NL)
(72) Inventor: VAN DEN BERG, Jan Jasper, 5656 AE Eindhoven (NL); LAWRENSON, Matthew John, 5656 AE Eindhoven (NL); WRIGHT, Christopher John, 5656 AE Eindhoven (NL); GEURTS, Lucas Jacobus Franciscus, 5656 AE Eindhoven (NL); BUIL, Vincentius Paulus, 5656 AE Eindhoven (NL)
(74) Representative: de Haan, Poul Erik

(57) **Abstract**

An air flow analysis system comprises a video capture and analysis system for capturing video content of a volume to be analyzed and identifying motions of objects within, or structures of, the volume to be treated. These motions are induced by an air flows. The air flow in the volume to be treated can then be characterized, for example the air flow rate and optionally also direction at different locations in space, based on the video analysis. An air treatment system combines an air treatment device having an air flow generation system and the air flow analysis system, so that the air treatment may be controlled taking into account the effect of the air treatment settings on the air flow characteristics in the volume to be treated.

## Description

### FIELD OF THE INVENTION

This invention relates to the analysis of air flows, in particular for air treatment systems and methods, and in particular for control of the flow of treated air to an indoor space.

### BACKGROUND OF THE INVENTION

Air treatment devices, such as purifiers and humidifiers, typically use internal fans to drive air flow within a space being treated, such as room. The efficiency of the device depends in part on the ability of the fans to cycle the whole air volume within a room. In the case of air purifiers, devices are rated on this efficiency by the Clean Air Delivery Rate (CADR).

The placement of an air treatment device within a room or building can have a very significant effect on the efficiency of the device's function, due to the different air cycling flow created within the space as well as other factors such as proximity to users and pollutant sources. The provision of high quality, processed air to the user cannot therefore be guaranteed, as the location of high Air Quality (AQ) spaces generated by a device will be dependent on the flows existing within a room, the device placement and the geometry of the room.

As a result, the placement of the air treatment device and its settings may result in sub-optimal air quality in areas where it is desired (e.g. in the vicinity of a user), even if the air treatment device is located near to a user. Inefficient or slow air flow may result through some areas of a room, reducing the air cleaning efficiency of the air treatment device in those areas. There is also the possibility of an increased amount of suspended dust and pollutants through creation of turbulent flows.

The air flow conditions can be directly measured using air flow sensors, but this requires a large number of interconnected devices and a complex installation procedure. Thus, air treatment devices do not generally have access to distributed air flow sensors that could be used to determine the flow conditions within a given space. For some air treatment applications, sensors maybe available in future that allow relevant sensing of air conditions at locations other than the air treatment device, such as using sensor data from smartphones and other wearables. However the location of these cannot be easily controlled and will only provide sparse data.

For commercial air treatment devices, it is known to perform sensing of air quality parameters at non-device locations around a room. This is performed by a user who can manually adjust the flow settings of air treatment devices for optimal comfort within a comfort zone. It is however difficult for a user to detect manually whether or not the air flow at a particular location is in fact suitable or not. This approach is also limited to one or a few locations, potentially leading to poorly filtered areas of a room. The user will also not know in detail how much the air flow may be modified at any particular location based on the range of adjustments that may be available. A manual adjustment also does not enable any additional learning function for the device, since for example the user's location is unknown. The adjustment process is also inconvenient for the user.

Knowledge of the flow conditions within a room could be used to optimize the design of the air flow created by an air treatment device for a given goal. This optimization can for example be achieved using computational Flow Dynamics (CFD) given assumptions and some knowledge of the air conditions and flow generated by the device. The computations assume estimated or measured initial conditions (such as temperature, and air inflow/outflow velocity from an air treatment device). 3D knowledge of the space as well as limited air flow information is therefore required. However, the 3D room geometry may often not be available. Furthermore, accurate air flow characterization in a room requires complex computation such as FEM modelling, which is beyond the processing capabilities of air treatment devices. Simplifications to these calculations may reduce the computation required but involve assumptions which can create inaccurate simulations. Due to these drawbacks, CFD is not used in the consumer environment and is limited to initial device design scenarios.

There is therefore a need for a system which can be implemented with low cost, and which does not require significant user effort, in order to enable air flow characteristics in a space to be determined. One application is for an air treatment device configured to deliver desired air treatment characteristics for a given space, taking account of the geometry and contents of that space.

### SUMMARY OF THE INVENTION

The invention is defined by the claims.

According to examples in accordance with an aspect of the invention, there is provided an air flow analysis system, comprising:
a video capture system for capturing video content of a volume to be analyzed;
a video analysis system for capturing motions of objects within, or structures of, the volume to be treated induced by air flows; and
a controller, wherein the controller is adapted to characterize the air flow in the volume to be analyzed based on the video analysis performed by the video analysis system.

This system makes use of video capture to characterize air flow characteristics based on very small movements of objects and structures caused by an air flow. These movements are for example oscillations at resonant frequencies which are induced by the air flows present in the vicinity of those objects and structures. Based on these oscillations, the air flow characteristics in the vicinity of those objects and structures within the volume may be determined. The air flow speed and optionally also direction may be determined at multiple points in the volume.

The video analysis system is for example for amplification of small motions between video frames. These small motions result from the flow of air at the location of the objects and structures. By analyzing the size of the motions, based on known responses to air flows of different flow rates, the nature of the air flow which induced the motion can be derived.

The video analysis system for example comprises a Eulerian Video Magnification system. This is a recent image processing approach which enables very small motions to be detected, and it may be applied in real time to provide live feedback thereby enabling a closed loop control system to be formed. It is based on spatial decomposition and temporal filtering.

The controller is for example adapted to identify locations within the volume at which the air flow is able to be characterized based on identifiable objects and structures. Thus, objects and structures are identified, and they are at the locations where the air flow may be characterized. If the air flow is characterized at a set of locations, interpolation or extrapolation may be used to estimate the air flow conditions at other locations.

The controller may be adapted to measure oscillation amplitudes at the identified locations. These oscillation amplitudes are then correlated with the air flow velocity at the corresponding location.

The system then may comprise a memory which stores oscillation amplitude profiles, wherein the controller is adapted to characterize the air flow based on the oscillation amplitude profiles. These profiles are obtained as part of a system calibration.

There may be a system calibration for the particular volume to be analyzed, or a more general calibration. For example, an object recognition system may identify at least some of the objects and structures, and for identified objects and structures there maybe general characteristic responses to air flows so that more general calibration information may be used.

A system calibration for the particular volume to be analyzed may be performed at system installation, and periodically thereafter. It maybe performed when a volume to be treated is reconfigured.

The system may further comprise a set of objects for placing in the volume to be treated within the field of view of the video capture system. These objects ensure that there is a set of locations at which the air flow can be monitored. They are passive objects, such as a strip of material which deflects in an air flow. In combination with the video capture and processing systems, they implement a distributed network of sensors in a low cost and simple manner.

The controller may be adapted to characterize the air flow by determining a flow rate and flow direction in the vicinity of the objects and structures. The flow direction may for example be obtained based on analysis of a set of flow rates at different locations.

The invention also provides an air treatment system, comprising:
an air treatment device comprising an air flow generation system for delivering treated air to a volume to be treated, which corresponds to the volume to be analyzed; and
an air flow analysis system as defined above, wherein the air flows are created by the air flow generation system.

By performing characterization of the air flow for different settings of the air flow generation system, the air treatment characteristics for different settings can be determined fully. It also enables the controller to determine (confirm) that the observed oscillations are caused by the air flow.

It is also possible to monitor the effect of changes in the room, e.g. repositioning of people and/or furniture, on the air flow characteristics which result from those different settings.

The controller may be adapted to control the air flow generation system in dependence on the characterized air flow. In this way, the air treatment function can be controlled so that desired air quality characteristics or desired air flow characteristics can be obtained in all parts of the volume, or in specific desired parts of the volume. For example, it can be ensured that the desired air treatment function is achieved at the location of a user.

The system may further comprise a modulating system for modulating the output of the air flow generation system to provide a frequency profile. This frequency profile for example comprises a pulsed flow, which may be created by controlling an output valve. This pulsed flow creates a pulsed response from the objects and structures, so that it can be determined that the monitored movements result from the air flow rather than from other air movements or general vibrations, for example caused by an open window, or passing traffic.

The air treatment device for example comprises a humidifier or dehumidifier or an air purifier. The air flow generation system typically comprises a fan, with a controllable fan speed setting and/or output flow direction.

The invention also provides a method of characterizing an air flow, comprising:
capturing video content of the volume to be analyzed;
performing video analysis to capture motions of objects within, or structures of, the volume to be analyzed induced by an air flow; and
characterizing the air flow in the volume to be analyzed based on the video analysis performed by the video analysis system.

The air flow is for example generated by an air treatment system which comprises an air treatment device comprising an air flow generation system for delivering treated air to a volume to be treated, wherein the method further comprises controlling the air flow generation system in dependence on the characterized air flow.

The invention may be implemented at least in part in software. Thus, the invention provides a computer program which comprises code means which is adapted, when said program is run on a computer, to implement the method defined above.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows an air treatment system comprising an air treatment device a video capture and processing system;
Figure 2 shows an air treatment method; and
Figure 3 illustrates an example of a computer for implementing the controller of the system.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an air flow analysis system comprises a video capture and analysis system for capturing video content of a volume to be analyzed and identifying motions of objects within, or structures of, the volume to be treated. These motions are induced by an air flows. The air flow in the volume to be treated can then be characterized, for example the air flow rate and optionally also direction at different locations in space, based on the video analysis. An air treatment system combines an air treatment device having an air flow generation system and the air flow analysis system, so that the air treatment may be controlled taking into account the effect of the air treatment settings on the air flow characteristics in the volume to be treated.

The air flow analysis system may be used generally for characterizing air flows with a volume, such as a closed or partially closed volume. The invention will be described with reference the main application use, which is for an air treatment device. By air treatment is meant any process which changes i.e. modifies the air characteristics, such as the temperature, humidity, flow speed or direction, or particulate or other pollutant content.

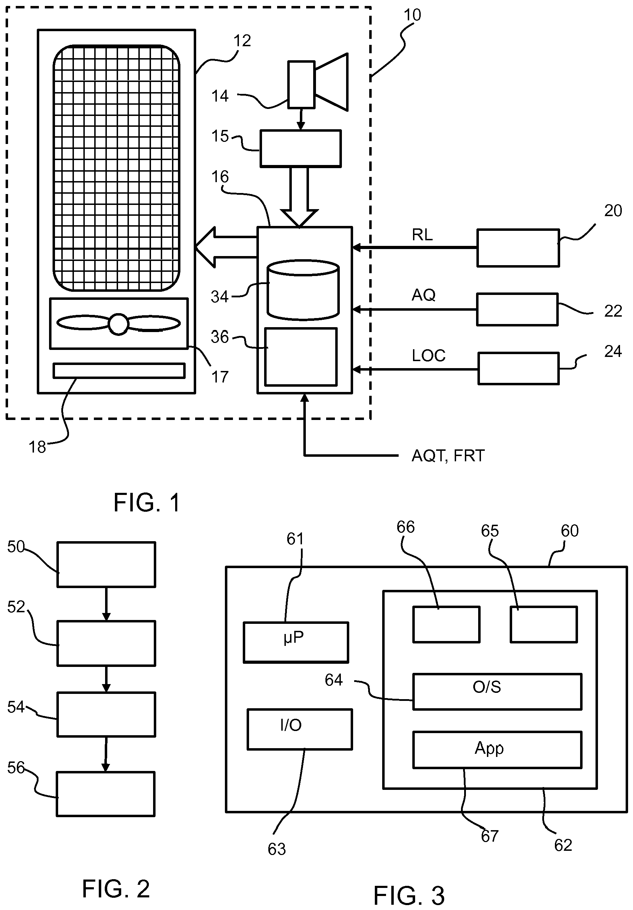

Figure 1 shows an air treatment system 10 comprising an air treatment device 12 for delivering treated air to a volume to be treated and a digital video capture system 14 for capturing video content of the volume to be treated. A video analysis system 15 is for capturing motions of objects within, or structures of, the volume to be treated induced by an air flow created by the air treatment device.

The video capture system may be a part of the system, located at the same position as the air treatment device, or it may be a remote device such as a camera of a smart phone of a user.

A controller 16 is adapted to characterize the air flow in the volume to be treated based on the video analysis performed by the video analysis system 15.

Optionally, the controller 16 is also used to control the air flow provided by the air treatment device 12 to deliver treated air with desired air flow characteristics.

The air treatment device 12 has an air flow generation system 17 in the form of a fan with fan speed settings and optionally also directional fan settings, for delivering treated air with adjustable air flow characteristics. There may also be an output valve 18 which can modulate the air flow generation system to provide a pulsed output of a known frequency.

These adjustable flow characteristics for example comprise at least an overall air flow rate. They may additionally comprise a relationship between flow rate and direction.

The video analysis is used to detect very small movements of objects and structures caused by the air flow. These movements are for example oscillations at resonant frequencies which are induced by the air flows present in the vicinity of those objects and structures. These oscillatory changes may be present as pixel intensity or color variations in a modified video which results from the analysis. Based on these oscillations, the air flow characteristics in the vicinity of those objects and structures within the volume may be determined.

The video analysis system for example comprises a Eulerian Video Magnification system.

Eulerian Video Magnification is an image processing technique that applies a spatial decomposition followed by a temporal filter to the frames of any standard video in order to amplify very small motions that are present but were previously imperceptible. The technique can be applied in real time to highlight events occurring at specified temporal frequencies.

Various papers have been published by researchers associated with MIT describing video magnification. The methods are classified into two main categories, Eulerian and Lagrangian. For Lagrangian approaches, the motions are estimated explicitly (so the motions themselves are amplified), whereas for Eulerian techniques the non-motion compensated frame differences are calculated and amplified.

The first paper relating to the Eulerian approach is 'Eulerian Video Magnification for Revealing Subtle Changes in the World' published in Science Vol. 339 No. 6119, Feb 1 2013.

The approach enables magnification of small motions in the presence of large motions. Motions of a certain frequency can be amplified, and the process has relatively low computational overhead. The approach may be applied to conventional camera images with low frame rates. The Eulerian approach is inspired by observing how the properties of a voxel of fluid, such as pressure and velocity, evolve over time. Motion itself is not magnified, rather the changes in color at a fixed point over time are magnified.

The Eulerian approach supports large amplification factors, and good noise performance. Eulerian video magnification techniques have been used to estimate mechanical properties such as stiffness and density of objects with fixed or known geometry from video alone, termed 'visual vibrometry'.

By way of example, the paper 'Video Magnification in the Presence of Large Motions' published in the IEEE Conf. on Computer Vision and Pattern Recognition (CVPR), 2015 compared standard Eulerian video and Eulerian video modified to cope with large motion to algorithms based on a Lagrangian approach. The modification, to allow the algorithm to show small motion in the presence of large motion, involves highlighting a region of interest (ROI), and then global motion (i.e. including that outside the ROI) is not magnified to give video with dramatically reduced artefacts.

The technique can be used to highlight motion of a particular frequency, by selecting motion of a certain frequency for amplification.

In this application, the frequency of a characteristic vibration mode of an object or structure caused by an air flow may be selected for amplification.

The video analysis system 15 comprises a video processing algorithm that implements the Eulerian video magnification. The video processing algorithm processes the captured video data to generate processed video data that highlights the minute changes in motion in an enhanced/more visible manner. This data may fundamentally consist of oscillation frequency spectra, amplitude and location within an image.

The processed video data is passed to the controller 16 for further analysis. The controller comprises a database 34 and a processor 36.

In the controller 16, object recognition or classification may be implemented in combination with position identification. The database 34 may then store air behavioral properties of different objects which may be recognized, such as different plants or furniture items. They may have known associated stiffness characteristics.

Optionally, the range of amplified frequencies could be limited based on pre-defined frequencies that are likely to be caused by air flows and not by other vibration sources such as nearby road traffic or acoustic sources. It is possible for example to analyze vibrations only with certain frequencies within the whole video image.

Filtering may be used to ignore stationary vibrations that are generated by other devices in the volume to be treated. The oscillatory response to certain identifiable activities, such as a person or dog that walks in the volume to be treated, may also be filtered out.

The algorithm implemented by the processor 36 of the controller 16 also identifies points within the processed video data that maybe used as locations at which air flow parameters may be obtained. These measurement locations for example comprise locations of objects with characteristic oscillation frequencies, and boundaries within the processed video data.

These points are identified as image areas which share temporally and spectrally similar oscillation frequency components, based on a pre-defined similarity threshold. Certain measurement locations may also be filtered out using several criteria, such as size and oscillation frequency. This identification method means that, for example, if a single object such as an item of clothing has multiple sections that oscillate independently with significantly different frequency spectra, these will be counted as separate measurement locations.

Objects which would normally be considered to be fixed and static, such as furniture or other relatively heavy objects, may nevertheless oscillate in response to stimulation by the air flow and thus be detectable.

There could however be a situation where a volume to be treated has only very rigid objects, for example no plants or clothes or other objects that respond in a measurable way to the air flow. The system may therefore have a set of dummy objects for placing in the volume to be analyzed, within the field of view of the video capture system. These would function as air flow pick-up devices, for example in the form a strip of paper or a flexible straw in a small stand. These objects have known stiffness characteristics and vibration dynamics, which very much help the algorithm in determining air flow impact. By designing these objects in a particular color or pattern, they can easily be identified in the camera image. Since the size and shape of these air flow pick-up objects are known to the system, the relative size and position in the video image in relation to a room model can be used to identify where in the room they are positioned, to model the air flow characteristics in the room.

These air flow pick-up devices are positioned in view of the camera and not blocked by furniture. This may be verified by looking at an image of the camera to verify that the object is visible, for example by relaying the camera image to a user's smartphone.

At these measurement locations, the oscillation amplitude data is measured for example as the average amplitude of oscillatory motion across the area of a measurement location. Over time, the range of possible amplitudes are recorded in the measurement location profiles, with bands of oscillation amplitude corresponding to a relative air speed, such as low, medium and high. The definition of these bands may be continuously updated. These measurement location profiles are stored in the database 34.

The measurement location profiles are used to ensure that the frequencies which are selected for amplification are caused by the air flow generating device (and not by some other source).

In order to establish the measurement location profiles, a frequency sweep may be used as part of a system installation or calibration. Additional calibration routines may be used during system use which involve modifying or moderating the air flow and observing the effect on the measurement location in order to verify that the observed frequencies are indeed caused by the airflow.

It is alternatively possible to calculate the frequencies associated with the measurement locations to form the measurement location profiles.. For example, if the air flow is modulated with valve 18 with a known frequency, and the material properties at the measurement location are known, the frequencies to analyze at the measurement location may be calculated.

A similar approach may be used to identify the positions in space which are suitable measurement locations in the first place. A test signal in a given frequency bandwidth may be applied to the air flow producing unit, and a frequency sweep may be carried out in that bandwidth. A full sweep may be possible by ensuring there is no other source that can create the vibration.

Optionally, further techniques could be used to augment the measurement location profiles such as determining object stiffness for more accurate or quantitative air flow measurements using techniques such as visual vibrometry.

An air flow measurement algorithm uses the measurement location profiles to calculate (or more accurately estimate) the current air flow characteristics in the processed video data such as air flow speed, direction and location within the image.

For example, the current air flow speed maybe determined at each measurement location by using current oscillation amplitude data to query the corresponding flow speed in the measurement location profiles.

A short period of oscillation amplitude data is for example temporarily stored. Temporal patterns of amplitude variation in individual measurement locations within this period may then tested for correlation against patterns observed in adjacent measurement locations. A pre-defined confidence threshold is used to determine reliable matches. In this manner, flow direction between measurement locations can also be determined which is added as a vector to the measurement location profiles.

The direction of movement of a material at a measurement location will depend on the which angle at which the flow hits the measurement location. For example, the effects of a change in the airflow velocity may be observed and matched between multiple adjacent measurement points, allowing the propagation of an airflow signature through a room to be tracked. A profiling of measurement points, to relate movement direction and patterns to flow directions, may be an additional way to determine the direction of air flow, to be used in addition to the method described above.

This flow direction measurement may also be used to quantify flow speeds with reference to distances within the image, by measuring time taken for a flow pattern to travel between two measurement locations. The attenuation of the air flow may also be determined, in addition to the trajectory.

Each time additional information relating to a measurement location is obtained, reference information may be added to the measurement location profiles of the measurement locations that were used to make the measurement.

As mentioned above, an output valve 18 may be used to modulate the air flow with a known frequency, which can then be detected by the camera and related back to the air treatment device. In this way it is confirmed that an observed air flow being analyzed results from the flow generated by the air treatment device. To prevent the modulated air flow being uncomfortable for the user, it may comprise a low amplitude modulation and may be performed periodically but infrequently. By adjusting air flow parameters it can also be observed if there is a repeatable effect on certain objects in the environment.

The characterization may also involve adjusting the air flow characteristics until observable effects are recorded at the desired measurement locations. This approach involves providing a series of test signals, and it improve estimation of the air flow characteristics.

For example, a test signal may be used if measurement location profiles exist that do not have fully identified air flow characteristics. If the air treatment device has control over a single function such as flow speed, the current air flow speed may be used to query a lookup table of pre-set adjustments to the air flow speed around the current setting to elicit a small temporal modulation of the air flow at a specific frequency. This produces a test signal with a particular frequency which can then be extracted by the video processing algorithm. The test signal is detected by the air flow measurement algorithm and used to improve estimation of the air flow characteristics.

There are various additional optional features.

One approach is for the video capture system or a connected sensor 20 to have the capability to determine the 3D layout of the volume to be treated (the room layout RL). This would enable several additions to the system.

The air flow direction and velocity could then be determined in three dimensions, enabling the flow direction to be measured at more points in the volume to be treated. Greater awareness of distances and directions between measurement locations would also improve the accuracy of flow speed and direction measurements between points.

If the distance between measurement locations is known relative to the air treatment device (e.g. if an RGBD camera is located in the device or any other technology which creates a room map), the frequency or amplitude of the control settings applied as test signals may be tuned by the air flow measurement algorithm to counteract the smoothing of air flow variations that may occur over distance. This would allow smaller test signals to be created for closer measurement locations, thus reducing potential disruption to the tested flow regime.

Another approach is for more detailed oscillation information to be measured, such as the frequency composition of oscillations and spatial frequency distributions within the measurement locations. As the frequency composition of the oscillation signals will vary with air flow direction past anisotropic objects, frequency compositions and spatial distributions maybe added to measurement location profiles and labelled with known flow directions. Current measured oscillation signals could then be tested for correlation with data in measurement location profiles to determine flow direction under new flow conditions.

The air treatment device may comprise multiple fans with separate spatial locations, or otherwise having directional or spatial control over the air flow. The settings may be selected as part of the test signals to determine the different effects of these different spatial settings. For example, in an air purifier with multiple output vents or a vent with controllable direction, the effect of each on the air flow within the volume to be treated could be determined by using appropriate test signals. This information could be used to associate measurement locations with different device air flow outputs or spatial settings that affected those measurement locations. This information could be stored in the measurement location profiles. In this case, the air flow measurement algorithm could design settings to target specific areas of the volume to be treated with missing information. This would cause less disruption to the general flow conditions and may enhance the ability to determine air flow dynamics between measurement locations, as the test signal will affect a smaller area, giving a greater degree of lateral flow resolution.

The sensing of objects may extend to the detection of other air flow sources that could be disturbing. For example, an open window in a baby room could create an undesired draft.

The air treatment device shown in Figure 1 has target settings, shown as an input to the controller. There is an air quality target (AQT) and an air quality sensor 22 is then provided for measuring an air quality (AQ) so that a feedback loop maybe implemented. There is also a flow reach target (FRT). With this, the user can set a desired air flow reach in 3D space. The system will then measure the effect of the treatment and adapt the settings to generate the desired air flow reach. By determining the air flow reach from various positions, an optimal position can also be determined to place the air treatment device.

In a professional medical environment the air flow around patients could be monitored to map disease spreading and/or adapt air flow to prevent spreading.

Figure 1 also shows a location sensor 24 for tracking the location of a user. This may be used to control the settings of the air treatment device (with the knowledge of the air flow characteristics of the volume to be treated) so that a desired air flow or air quality is achieved at the user location.

Figure 2 shows a method of characterizing an air flow, comprising:
in step 50, capturing video content of the volume to be analyzed;
in step 52, performing video analysis to capture motions of objects within, or structures of, the volume to be treated induced by an air flow; and
in step 54 characterizing the air flow in the volume to be treated based on the video analysis performed by the video analysis system.

The method further comprises in step 56 controlling an air flow generation system of an air treatment in dependence on the characterized air flow.

The system described above makes use of a controller for processing data.

Figure 3 illustrates an example of a computer 60 for implementing the controller or processor described above.

The computer 60 includes, but is not limited to, PCs, workstations, laptops, PDAs, palm devices, servers, storages, and the like. Generally, in terms of hardware architecture, the computer 60 may include one or more processors 61, memory 62, and one or more I/O devices 63 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 61 is a hardware device for executing software that can be stored in the memory 62. The processor 61 can be virtually any custom made or commercially available processor, a central processing unit (CPU), a digital signal processor (DSP), or an auxiliary processor among several processors associated with the computer 60, and the processor 61 may be a semiconductor based microprocessor (in the form of a microchip) or a microprocessor.

The memory 62 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 62 may incorporate electronic, magnetic, optical, and/or other types of storage media. Note that the memory 62 can have a distributed architecture, where various components are situated remote from one another, but can be accessed by the processor 61.

The software in the memory 62 may include one or more separate programs, each of which comprises an ordered listing of executable instructions for implementing logical functions. The software in the memory 62 includes a suitable operating system (O/S) 64, compiler 65, source code 66, and one or more applications 67 in accordance with exemplary embodiments.

The application 67 comprises numerous functional components such as computational units, logic, functional units, processes, operations, virtual entities, and/or modules.

The operating system 64 controls the execution of computer programs, and provides scheduling, input-output control, file and data management, memory management, and communication control and related services.

Application 67 may be a source program, executable program (object code), script, or any other entity comprising a set of instructions to be performed. When a source program, then the program is usually translated via a compiler (such as the compiler 65), assembler, interpreter, or the like, which may or may not be included within the memory 62, so as to operate properly in connection with the operating system 64. Furthermore, the application 67 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 63 may include input devices such as, for example but not limited to, a mouse, keyboard, scanner, microphone, camera, etc. Furthermore, the I/O devices 63 may also include output devices, for example but not limited to a printer, display, etc. Finally, the I/O devices 63 may further include devices that communicate both inputs and outputs, for instance but not limited to, a network interface controller (NIC) or modulator/demodulator (for accessing remote devices, other files, devices, systems, or a network), a radio frequency (RF) or other transceiver, a telephonic interface, a bridge, a router, etc. The I/O devices 63 also include components for communicating over various networks, such as the Internet or intranet.

When the computer 60 is in operation, the processor 61 is configured to execute software stored within the memory 62, to communicate data to and from the memory 62, and to generally control operations of the computer 60 pursuant to the software. The application 67 and the operating system 64 are read, in whole or in part, by the processor 61, perhaps buffered within the processor 61, and then executed.

When the application 67 is implemented in software it should be noted that the application 67 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

As mentioned above, the invention may be used in systems other than air treatment devices. Examples are vent or draft characterization in homes (for example to detect which windows or doors are open or closed), wind speed and direction characterization, and sail wind force impact characterization.

A Eulerian Video Magnification system has been discussed in detail above, as an example of suitable image processing approach for detecting motions, and with the ability to select particular motion frequencies. However, other image processing approaches may be used which enable the same extraction of small motions.

The description above refers to two processors, one 15 for the image analysis and another 36 for the flow characterization. This is simply to ease the explanation of the overall system. In practice, all software may be hosted on a single processor, or there may be more than two separate processors within the overall system. Different processing functions do not need to take place at the same location. For example the image processing may be performed at the camera location (e.g. a smart phone) and the flow characterization and control of the air treatment device may be performed locally. Any other division of tasks is possible.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An air flow analysis system, comprising:
a video capture system (14) for capturing video content of a volume to be analyzed;
a video analysis system (15) for capturing motions of objects within, or structures of, the volume to be treated induced by air flows; and
a controller (16), wherein the controller is adapted to characterize the air flow in the volume to be analyzed based on the video analysis performed by the video analysis system.

2. An analysis system (10) as claimed in claim 1, wherein the video analysis system (15) comprises a Eulerian Video Magnification system.

3. An analysis system (10) as claimed in claim 1 or 2, wherein the controller (16) is adapted to identify locations within the volume at which the air flow is able to be characterized based on identifiable objects and structures.

4. An air treatment system (10) as claimed in claim 3, wherein the controller (16) is adapted to measure oscillation amplitudes at the identified locations.

5. An air treatment system (10) as claimed in claim 4, comprising a memory (34) which stores oscillation amplitude profiles, wherein the controller is adapted to characterize the air flow based on the oscillation amplitude profiles.

6. An air treatment system as claimed in any one of claims 1 to 5, further comprising a set of objects for placing in the volume to be analyzed within the field of view of the video capture system.

7. An air treatment system as claimed in any one of claims 1 to 6, wherein the controller (16) is adapted to characterize the air flow by determining a flow rate and flow direction in the vicinity of the objects and structures.

8. An air treatment system (10), comprising:
an air treatment device (12) comprising an air flow generation system (17) for delivering treated air to a volume to be treated, which corresponds to the volume to be analyzed; and
an air flow analysis system (14, 15, 16) as claimed in any one of claims 1 to 7, wherein the air flows are created by the air flow generation system.

9. An air treatment system as claimed in claim 8, wherein the controller (16) is adapted to control the air flow generation system in dependence on the characterized air flow.

10. An air treatment system (10) as claimed in claim 9, further comprising a modulating system (18) for modulating the output of the air flow generation system to provide a frequency profile.

11. An air treatment system as claimed in any one of claims 8 to 10, wherein the air treatment device (12) comprises a humidifier or dehumidifier or an air purifier.

12. An air treatment system as claimed in any one of claims 8 to 11, wherein the air flow generation system (17) comprises a fan, with a controllable fan speed setting and/or output flow direction.

13. A method of characterizing an air flow, comprising:
(50) capturing video content of the volume to be analyzed;
(52) performing video analysis to capture motions of objects within, or structures of, the volume to be analyzed induced by an air flow; and
(54) characterizing the air flow in the volume to be analyzed based on the video analysis performed by the video analysis system.

14. A method as claimed in claim 13, wherein the air flow is generated by an air treatment system which comprises an air treatment device comprising an air flow generation system for delivering treated air to a volume to be treated, wherein the method further comprises (56) controlling the air flow generation system in dependence on the characterized air flow.

15. A computer program comprises code means which is adapted, when said program is run on a computer, to implement the method of claim 13 or 14.
